# FASCICULE DE BREVET EUROPEEN

(11) **EP 2 817 499 B1**
(45) Date de publication et mention de la délivrance du brevet: **27.04.2016**
(21) Numéro de dépôt: 13711070.6
(22) Date de dépôt: 12.02.2013
(51) Int. Cl.: F02C 7/22, F02C 7/232, F23K 5/14, F23R 3/28, F23D 11/26

(54) **INJECTEUR DE CARBURANT POUR UNE TURBOMACHINE**
BRENNSTOFF-EINSPRITZDÜSE FÜR GASTURBINE
FUEL INJECTION NOZZLE FOR GAS TURBINE

(30) Priorité: 24.02.2012 FR 1251727
(43) Date de publication de la demande: 31.12.2014
(73) Titulaire: SNECMA, 75015 Paris (FR)
(72) Inventeur: POUSSEO, Emilie, Charlotte, F-77550 Moissy Cramayel Cedex (FR); RODRIGUES, José, Roland, F-77550 Moissy Cramayel Cedex (FR)
(74) Mandataire: Robert, Mathias
(86) Numéro de dépôt international: PCT/FR2013/050280
(87) Numéro de publication internationale: WO 2013/124568

(56) Documents cités:
- EP-A1- 1 312 863
- EP-A1- 1 312 864
- US-A1- 2010 037 615

## Description

La présente invention concerne un injecteur de carburant pour une turbomachine, telle qu'un turboréacteur ou un turbopropulseur d'avion.

Une turbomachine comporte classiquement une chambre de combustion annulaire comportant à son extrémité amont des injecteurs de carburant, régulièrement répartis, et des moyens d'amenée d'air autour des injecteurs.

Il existe principalement deux types d'injecteurs, à savoir les injecteurs dits aéromécaniques comportant deux circuits de carburant offrant des débits de carburant adaptés à des phases de fonctionnement différentes de la turbomachine, (phase d'allumage, phase de fonctionnement à faible ou à pleine puissance), et les injecteurs dits aérodynamiques qui ne comportent qu'un seul circuit de carburant pour toutes les phases de fonctionnement de la turbomachine.

La demande de brevet FR 2 832 492, au nom de la Demanderesse, décrit un injecteur de type aéromécanique, comportant un circuit primaire de carburant destiné par exemple à une phase d'allumage et de faible puissance, et un circuit secondaire intervenant dans les phases de fonctionnement ultérieures, de moyenne à forte puissance, en complément du circuit primaire. Un autre injecteur selon le préambule de la revendication 1 est connu du document de demande de brevet EP 13 12 864 A1.

Ce type d'injecteur comporte un corps comprenant des moyens d'admission de carburant sous pression, une soupape d'arrêt montée dans le corps en aval des moyens d'admission et conçue pour s'ouvrir sous une première pression déterminée de carburant et pour rester ouverte au-delà de cette première pression afin d'alimenter un circuit primaire de carburant, et une soupape de dosage montée dans le corps en aval de la soupape d'arrêt et conçue pour s'ouvrir au-delà d'une seconde pression déterminée de carburant, supérieure à la première pression, et pour rester ouverte au-delà de la seconde pression afin d'alimenter un circuit secondaire de carburant.

Le réglage du débit de carburant dans le circuit secondaire est réalisé par l'intermédiaire de fentes de dosage ménagées dans la soupape de dosage et dont les sections de passage varient en fonction de la position de cette soupape, c'est-à-dire en fonction de la pression d'alimentation en carburant. Plus la pression d'alimentation en carburant est élevée, plus les sections de passage des fentes sont grandes.

Dans les phases d'allumage et de fonctionnement à bas régime, la soupape de dosage est fermée. Le carburant présent dans le circuit secondaire ne circule pas et est soumis à des températures importantes susceptibles de provoquer sa cokéfaction dans le circuit secondaire, ce qui est préjudiciable au bon fonctionnement et à la durée de vie de l'injecteur.

Ce phénomène se présente par exemple en cas de descente de l'avion, lors d'une période de fonctionnement à faible régime succédant à une période de fonctionnement à plein régime. Dans ce cas, l'environnement de l'injecteur peut atteindre des températures comprises entre 80 et 600 °C.

Il existe des moyens pour limiter l'échauffement de carburant dans le circuit secondaire, tels que la mise en place d'un ou plusieurs écrans thermiques.

Toutefois, de tels écrans ne permettent pas d'éviter de façon certaine le phénomène de cokéfaction décrit plus haut.

L'invention a notamment pour but d'apporter une solution simple, efficace et économique à ce problème.

A cet effet, elle propose un injecteur de carburant pour une turbomachine telle qu'un turboréacteur ou un turbopropulseur d'avion, comportant un corps comprenant des moyens d'admission de carburant sous pression, une soupape d'arrêt montée dans le corps en aval des moyens d'admission et conçue pour s'ouvrir sous une première pression déterminée de carburant et pour rester ouverte au-delà de cette première pression afin d'alimenter un circuit primaire de carburant, et une soupape de dosage montée dans le corps en aval de la soupape d'arrêt et conçue pour s'ouvrir au-delà d'une seconde pression déterminée de carburant, supérieure à la première pression, et pour rester ouverte au-delà de la seconde pression afin d'alimenter un circuit secondaire de carburant, caractérisé en ce qu'il comporte au moins un canal de fuite s'étendant depuis une zone située en aval de la soupape d'arrêt et en amont de la soupape de dosage jusque dans une zone située en aval de la soupape de dosage, destiné à générer un débit de fuite permanent dans le circuit secondaire.

Le débit de fuite empêche la stagnation du carburant dans le circuit secondaire et évite ainsi sa cokéfaction, en particulier lors des phases de démarrage et de fonctionnement à bas régime. On notera que le débit de fuite est permanent, c'est-à-dire est établi dans toutes les phases de fonctionnement, aussi bien au démarrage ou à bas régime qu'à moyen et à fort régimes.

De préférence, le canal de fuite a une forme de serpentin ou de labyrinthe, de façon à générer une perte de charge importante même en ayant une section de passage importante. Cette perte de charge importante permet de limiter le débit de fuite et donc également l'hétérogénéité dans la chambre de combustion, en particulier pour des phases à moyen et à fort régimes. Une grande section de passage permet en outre d'éviter tout risque de bouchage du canal de fuite par des impuretés.

Le canal de fuite a par exemple une forme hélicoïdale ou en spirale et peut s'étendre autour d'un axe confondu avec l'axe de la soupape de dosage.

Selon une forme de réalisation de l'invention, la soupape de dosage est montée de façon mobile dans un support tubulaire, une gorge hélicoïdale étant ménagée dans la paroi externe du support tubulaire, une douille entourant le support tubulaire de manière à recouvrir la gorge hélicoïdale et à former le canal de fuite qui débouche, à ses extrémités, respectivement en amont et en aval de la soupape de dosage.

Selon une autre forme de réalisation de l'invention, la soupape de dosage est montée de façon mobile dans un support tubulaire comportant un trou décalé par rapport à l'axe de la soupape de dosage et dans lequel est logé un insert, le canal de fuite étant ménagé dans l'insert.

L'invention concerne en outre une turbomachine, telle qu'un turboréacteur ou un turbopropulseur d'avion, comportant au moins un injecteur du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe longitudinale d'un injecteur de carburant de l'art antérieur,
- les figures 2 et 3 sont des vues en coupe longitudinale d'une partie d'un injecteur selon deux formes de réalisation de l'invention.

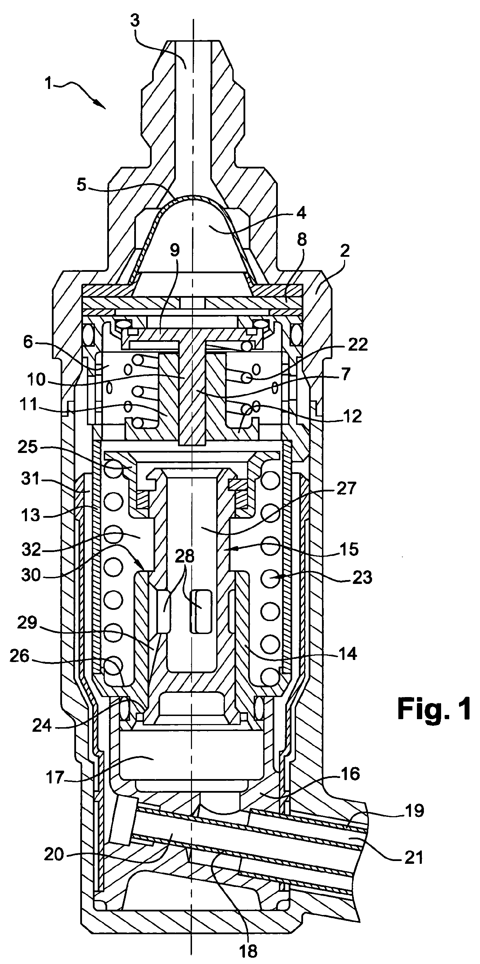

Un injecteur de carburant 1 tel que divulgué dans la demande de brevet FR 2 832 492 au nom de la Demanderesse est illustré à la figure 1.

Cet injecteur 1 est de type aéromécanique et comporte un circuit primaire de carburant destiné par exemple à une phase d'allumage et de faible puissance, et un circuit secondaire intervenant dans les phases de fonctionnement ultérieures, de moyenne à forte puissance, en complément du circuit primaire.

L'injecteur 4 comporte un corps 2 creux comprenant un orifice 3 d'admission de carburant, destiné à recevoir le carburant sous pression provenant d'une pompe à carburant non représentée, et débouchant dans une chambre de pré-admission 4 après avoir traversé une crépine de filtrage 5.

Le corps 2 comporte en outre une chambre d'admission 6 située en aval (dans le sens de circulation du carburant au sein de l'injecteur) de la chambre de pré-admission 4 et séparée de cette dernière par une soupape d'arrêt 7. Un diaphragme 8 est placé entre la chambre de pré-admission 4 et la soupape d'arrêt 7.

La soupape d'arrêt 7 comporte une tête 9 et une tige 10 montée de façon mobile dans une partie tubulaire 11 d'un support annulaire 12 fixe par rapport au corps 2. Ce dernier repose sur une douille tubulaire 13 s'étendant vers le bas et reposant elle-même sur un autre support tubulaire 14, dans lequel est monté une soupape de dosage 15. Le support 14 repose enfin sur une pièce 16 délimitant une chambre de réception 17 située sous la soupape de dosage 15 et servant au support de deux tubes coaxiaux 18, 19.

Le tube interne 18 forme un conduit 20 de circulation d'un flux de carburant primaire, l'espace annulaire ménagé entre les deux tubes 18, 19 formant un conduit 21 de circulation d'un flux de carburant secondaire.

Un espace annulaire 31 appartenant au circuit primaire est délimité entre la paroi externe de la douille 13 et le corps 2. La paroi interne de la douille 13 délimite en outre une chambre interne 32, située en amont de la soupape de dosage 15.

La soupape d'arrêt 7 est maintenue en position fermée par un ressort de rappel 22, l'ouverture de la soupape d'arrêt 7 s'effectuant lorsque la pression du carburant en amont de cette soupape dépasse une première valeur P1 déterminée.

La soupape de dosage 15 est également maintenue en position fermée par un ressort de rappel 23, l'ouverture de la soupape de dosage 15 s'effectuant lorsque la pression du carburant en amont de cette soupape 15 dépasse une seconde valeur P2 déterminée, supérieure à la première valeur P1 précitée.

La soupape de dosage 15 comporte une extrémité inférieure formant une tête destinée à reposer sur un siège 24 du support correspondant, et une extrémité supérieure au niveau de laquelle est fixée une coupelle 25. Le ressort de rappel s'appuie d'une part sur la coupelle 25 et d'autre part sur une surface radiale 26 du support 14.

La soupape de dosage 15 comporte un trou axial central 27 et des ouvertures radiales 28 débouchant dans le trou central 27 et dans des fentes de dosage 29 présentant des formes adaptées, ménagées dans la surface externe de la soupape de dosage 15.

La soupape de dosage 15 est mobile entre deux positions extrêmes, respectivement une position complètement fermée dans laquelle sa tête repose sur le siège 24 du support 14, sous l'action du ressort de rappel 23 correspondant, et une position complètement ouverte dans laquelle la coupelle 25 vient en butée contre l'extrémité supérieure 30 du support tubulaire 14.

En position complètement fermée de la soupape de dosage 15, représentée à la figure 1, les ouvertures 28 et les fentes 29 sont situées en regard du support tubulaire 14, l'extrémité inférieure des fentes 29 ne débouchant pas dans la chambre de réception 17. Dans cette position, le carburant présent dans la chambre 32 ne peut donc pas s'écouler dans la chambre de réception 17 et dans le conduit secondaire 21.

Lorsque la pression du carburant située dans la chambre 32 augmente, alors cette pression provoque le déplacement de la soupape de dosage 15 vers sa position d'ouverture, c'est-à-dire vers le bas, à l'encontre de l'effort exercé par le ressort de rappel 23.

Lorsque cette pression dépasse la seconde valeur P2, alors les fentes 29 débouchent dans la chambre de réception 17 et du carburant peut s'écouler dans le conduit secondaire 21.

Les géométries des fentes 29 sont telles que les sections de passage des fentes 29 varient en fonction de la position de la soupape de dosage 15. En particulier, plus la pression du carburant dans la chambre 27 est élevée, plus les sections de passage des fentes 29 sont grandes.

En fonctionnement, plusieurs cas peuvent se présenter.

Dans un premier cas, la pression du carburant dans la chambre de pré-admission 4 est inférieure à P1. La soupape d'arrêt 7 est alors maintenue en position fermée par le ressort de rappel 22 et le carburant ne s'écoule ni dans le conduit primaire 20, ni dans le conduit secondaire 21.

Dans un deuxième cas, correspondant à une phase d'allumage ou de fonctionnement à bas régime, la pression du carburant dans la chambre de pré-admission 4 est supérieure à P1, mais la pression du carburant dans la chambre 32 est inférieure à P2. La soupape d'arrêt 7 est alors ouverte et le carburant peut s'écouler dans l'espace annulaire 31 puis dans le conduit primaire 20 (circuit primaire). La soupape de dosage 15 reste toutefois fermée, et le carburant ne s'écoule pas dans le conduit secondaire 21.

Dans un troisième cas, correspondant à une phase de fonctionnement à moyen ou à plein régime, la pression du carburant dans la chambre de pré-admission 4 est supérieure à P1 et la pression du carburant dans la chambre 32 est supérieure à P2. La soupape d'arrêt 7 est ouverte et le carburant peut s'écouler dans l'espace annulaire 31 puis dans le conduit primaire 20 (circuit primaire). En outre, la soupape de dosage 15 est également ouverte et le fluide peut s'écouler au travers de la chambre 32, des ouvertures 28, des fentes 29, de la chambre de réception 17 puis du conduit secondaire 21 (circuit secondaire).

Comme indiqué précédemment, dans le deuxième cas de fonctionnement, le conduit secondaire 21 peut être soumis à un environnement très chaud et il existe un risque de cokéfaction du carburant présent dans ce conduit 21.

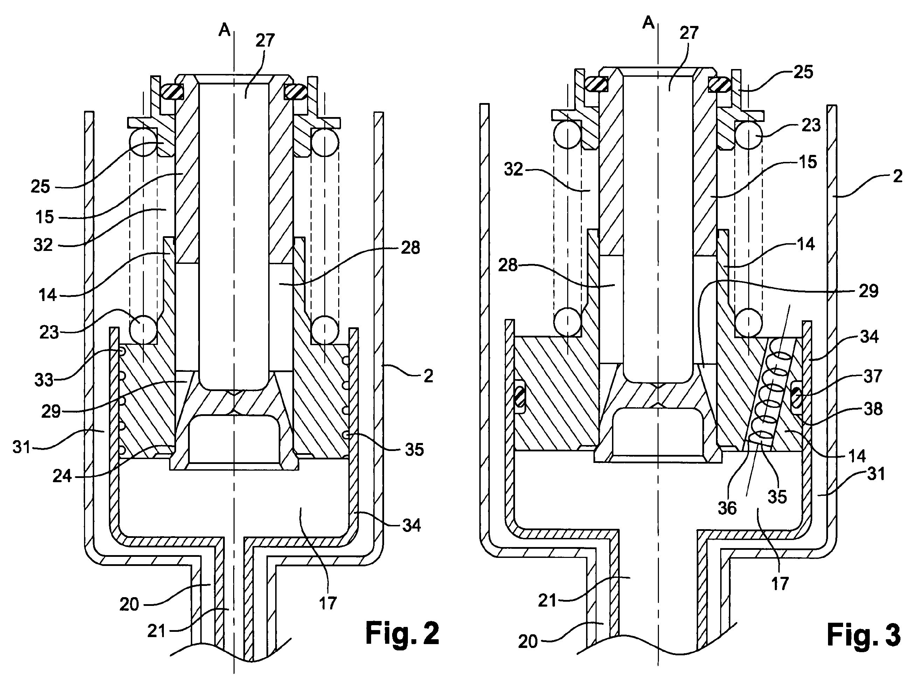

La figure 2 illustre une partie d'un injecteur 1 selon une première forme de réalisation de l'invention, dans laquelle une gorge hélicoïdale 33 est ménagée dans la paroi externe du support tubulaire 14, une douille 34 entourant le support tubulaire 14 de manière à recouvrir la gorge hélicoïdale 33 et à former un canal de fuite hélicoïdal 35 débouchant à ses extrémités, respectivement en amont et en aval de la soupape de dosage 15, c'est-à-dire respectivement dans les chambres 32 et 17.

A titre d'exemple, la section de passage du canal de fuite 35 est supérieure à 0,3 mm afin d'éviter tout risque de bouchage du canal 35, et est préférentiellement comprise entre 0.3 et 0.4 mm². La longueur totale du canal de fuite 35 est comprise entre 400 et 500 mm. La perte de charge générée par ce canal 35 est comprise entre 0.1 et 1.5 bars.

La douille 34 délimite également, dans cette forme de réalisation, la chambre de réception 17 et le conduit secondaire 21. Bien entendu, la chambre de réception 17 et le conduit secondaire 21 peuvent être formés par des éléments distincts les uns des autres, comme dans le cas de la figure 1.

De même, dans cette forme de réalisation, le corps 2 comporte une extrémité aval rétrécie délimitant le conduit primaire 20, de forme annulaire et entourant le conduit secondaire 21. Bien entendu, ce conduit 20 peut être formé par un élément distinct du corps 2, comme dans le cas de la figure 1.

La figure 3 illustre une forme de réalisation de l'invention dans laquelle le support tubulaire 14 comporte un trou décalé par rapport à l'axe A du corps 2 et de la soupape de dosage 15, dans lequel est logé un insert 36. Cet insert 36 comporte sur sa surface extérieure cylindrique un filetage hélicoïdal qui délimite avec la surface cylindrique du trou un canal de fuite hélicoïdal 35 ayant les dimensions requises.

Ce canal de fuite a une section triangulaire par exemple de 0.7 x 0.7 mm.

Des moyens d'étanchéités tels qu'un joint torique 37 sont en outre prévus entre la périphérie radialement externe de l'élément tubulaire 14 et la douille 34. Le joint 37 est par exemple logé dans une gorge 38 du support tubulaire 14.

Le canal de fuite 35 empêche la stagnation du carburant dans le conduit secondaire 21, lors des phases de démarrage et de fonctionnement à faible régime, c'est-à-dire lorsque la soupape de dosage 15 n'est pas encore ouverte, et évite ainsi la cokéfaction du carburant dans le circuit secondaire 17, 21.

La forme hélicoïdale du canal de fuite 35 génère une perte de charge importante qui permet de conserver une section de passage suffisamment grande.

Comme indiqué précédemment, une perte de charge importante limite le débit de fuite et donc également l'hétérogénéité dans la chambre de combustion, en particulier lors des phases à moyen et à fort régimes. Une grande section de passage permet en outre d'éviter tout risque de bouchage du canal de fuite 35.

## Revendications

1. Injecteur (1) de carburant pour une turbomachine telle qu'un turboréacteur ou un turbopropulseur d'avion, comportant un corps (2) comprenant des moyens (3) d'admission de carburant sous pression, une soupape d'arrêt (7) montée dans le corps (2) en aval des moyens (3) d'admission et conçue pour s'ouvrir sous une première pression déterminée de carburant et pour rester ouverte au-delà de cette première pression afin d'alimenter un circuit primaire de carburant (31, 20), et une soupape de dosage (15) montée dans le corps (2) en aval de la soupape d'arrêt (7) et conçue pour s'ouvrir au-delà d'une seconde pression déterminée de carburant, supérieure à la première pression, et pour rester ouverte au-delà de la seconde pression afin d'alimenter un circuit secondaire de carburant (17, 21),
**caractérisé en ce qu'**il comporte au moins un canal de fuite (35) s'étendant depuis une zone (32) située en aval de la soupape d'arrêt (7) et en amont de la soupape de dosage (15) jusque dans une zone (17) située en aval de la soupape de dosage (15), destiné à générer un débit de fuite permanent dans le circuit secondaire (17, 21).

2. Injecteur (1) selon la revendication 1, **caractérisé en ce que** le canal de fuite (35) a une forme de serpentin ou de labyrinthe.

3. Injecteur (1) selon la revendication 2, **caractérisé en ce que** le canal de fuite (35) a une forme hélicoïdale ou en spirale.

4. Injecteur (1) selon la revendication 3, **caractérisé en ce que** le canal de fuite (35) s'étend autour d'un axe (A) confondu avec l'axe de la soupape de dosage (15).

5. Injecteur (1) selon la revendication 3 ou 4, **caractérisé en ce que** le canal de fuite (35) est formé par un filetage d'une surface cylindrique.

6. Injecteur (1) selon l'une des revendications 3 à 5, **caractérisé en ce que** la soupape de dosage (15) est montée de façon mobile dans un support tubulaire (14), une gorge hélicoïdale (33) étant ménagée dans la paroi externe du support tubulaire (14), une douille (34) entourant le support tubulaire (14) de manière à recouvrir la gorge hélicoïdale (33) et à former le canal de fuite (35) débouchant, à ses extrémités, respectivement en amont et en aval de la soupape de dosage (15).

7. Injecteur (1) selon l'une des revendications 1 à 3, **caractérisé en ce que** la soupape de dosage (15) est montée de façon mobile dans un support tubulaire (14) comportant un trou décalé par rapport à l'axe (A) de la soupape de dosage (15) et dans lequel est logé un insert (36), le canal de fuite (35) étant ménagé dans l'insert (36).

8. Turbomachine, telle qu'un turboréacteur ou un turbopropulseur d'avion, comportant au moins un injecteur (1) selon l'une des revendications 1 à 7.

## Patentansprüche

1. Kraftstoffeinspritzung (1) für ein Turbinentriebwerk wie zum Beispiel ein Turbinenluftstrahltriebwerk oder ein Turbopropellertriebwerk eines Flugszeugs, das ein Gehäuse (2) mit unter Druck stehenden Kraftstoffeinlassmitteln und ein in das Gehäuse (2) hinter dem Kraftstoffeinlassmittel (3) montiertes Sperrventil (7) umfasst, und das so konzipiert wurde, dass es sich unter Einwirken eines ersten bestimmten Kraftstoffdrucks öffnet und auch über diesen ersten Druck hinaus offen bleibt, um einen primären Kraftstoffkreis (31, 20) zu speisen, und ein Dosierventil (15), das hinter dem Sperrventil (7) in das Gehäuse (2) montiert und so konzipiert wurde, dass es sich nach Einwirken eines zweiten bestimmten Kraftstoffdrucks, der größer ist als der erste, öffnet und über den zweiten Druck hinaus offen bleibt, um einen sekundären Kraftstoffkreis (17, 21) zu speisen, **dadurch gekennzeichnet, dass** sie mindestens einen Leckagekanal (35) umfasst, welcher sich von einem Bereich (32) hinter dem Sperrventil (7) und vor dem Dosierventil (15) bis zu einem Bereich (17) hinter dem Dosierventil (15) erstreckt, und dazu bestimmt ist, eine kontinuierliche geregelte Verlustmenge im zweiten Kreis (17, 21) zu generieren.

2. Einspritzung (1) nach Anspruch 1, **dadurch gekennzeichnet, dass** der Leckagekanal (35) serpentinen- oder labyrinthförmig ist.

3. Einspritzung (1) nach Anspruch 2, **dadurch gekennzeichnet, dass** der Leckagekanal (35) helicoidal- oder spiralförmig ist.

4. Einspritzung (1) nach Anspruch 3, **dadurch gekennzeichnet, dass** sich der Leckagekanal (35) an eine Achse (A) entlang erstreckt, die mit der Achse des Dosierventils (15) zusammenfällt.

5. Einspritzung (1) nach Anspruch 3 oder 4, **dadurch gekennzeichnet, dass** der Leckagekanal (35) durch eine Gewinde mit zylindrischer Oberfläche geformt wird.

6. Einspritzung (1) nach einem der Ansprüche 3 bis 5, **dadurch gekennzeichnet, dass** das Dosierventil (15) beweglich in einer röhrenförmigen Halterung (14) montiert ist, wobei eine helicoidale Nut (33) in die Außenwand der röhrenförmigen Halterung (14) gearbeitet ist, und eine Hülse (34) die röhrenförmige Halterung (14) so umschließt, dass die helicoidale Nut (33) bedeckt und der Leckagekanal (35) geformt wird, wobei dieser an den Enden jeweils vor und hinter dem Dosierventil (15) heraus führt.

7. Einspritzung (1) nach einem der Ansprüche 1 bis 3, **dadurch gekennzeichnet, dass** das Dosierventil (15) beweglich in eine röhrenförmige Halterung (14) montiert ist, welche ein im Bezug auf die Achse (A) des Dosierventils (15) versetztes Loch aufweist, in welchem ein Einsatz sitzt (36), wobei der Leckagekanal (35) in den Einsatz (36) eingearbeitet wird.

8. Turbinentriebwerk, wie zum Beispiel ein Turbinenluftstrahltriebwerks oder eine TurboPropellertriebwerk eines Flugzeugs, welches mindestens eine Einspritzung (1) nach einem der Ansprüche 1 bis 7 enthält.

## Claims

1. A fuel injector (1) for a turbine engine such as an airplane turboprop or turbojet, the injector comprising a body (2) having admission means (3) for admitting fuel under pressure, a stop valve (7) mounted in the body (2) downstream from the admission means (3) and designed to open at a first determined fuel pressure and to remain open beyond said first pressure in order to feed a primary fuel circuit (31, 20), and a metering valve (15) mounted in the body (2) downstream from the stop valve (7) and designed to open beyond a second determined fuel pressure greater than the first pressure, and to remain open beyond the second pressure in order to feed a secondary fuel circuit (17, 21), the injector being **characterized in that** it includes at least one leakage channel (35) extending from a zone (32) situated downstream from the stop valve (7) and upstream from the metering valve (15) to a zone (17) situated downstream from the metering valve (15) in order to generate a permanent leakage flow in the secondary circuit (17, 21).

2. An injector (1) according to claim 1, **characterized in that** the leakage channel (35) is in the form of a coil or a labyrinth.

3. An injector (1) according to claim 2, **characterized in that** the leakage channel (35) is of helical or spiral shape.

4. An injector (1) according to claim 3, **characterized in that** the leakage channel (35) extends around an axis (A) coinciding with the axis of the metering valve (15).

5. An injector (1) according to claim 3 or claim 4, **characterized in that** the leakage channel (35) is formed by a thread of a cylindrical surface.

6. An injector (1) according to any one of claims 3 to 5, **characterized in that** the metering valve (15) is movably mounted in a tubular support (14), a helical groove (33) being formed in the outer wall of the tubular support. (14), a bushing (34) surrounding the tubular support (14) so as to cover the helical groove (33) and form the leakage channel (35) that opens out at its ends respectively upstream and downstream from the metering valve (15).

7. An injector (1) according to any one of claims 1 to 3, **characterized in that** the metering valve (15) is movably mounted in a tubular support (14) having a hole offset relative to the axis (A) of the metering valve (15), and having housed therein an insert (36), the leakage channel (35) being formed in the insert (36).

8. A turbine engine such as an airplane turboprop or turbojet including at least one injector (1) according to any one of claims 1 to 7.
